Europäisches Patentamt

European Patent Office

Office européen des brevets

(19)

(11) Publication number: **0 109 581**
**A2**

## (12) EUROPEAN PATENT APPLICATION

(21) Application number: **83110634.9**

(22) Date of filing: **25.10.83**

(51) Int. Cl.³: **G 06 F 15/20**

(30) Priority: **22.11.82 US 443540**

(43) Date of publication of application:
**30.05.84 Bulletin 84/22**

(84) Designated Contracting States:
**DE FR GB**

(71) Applicant: **ALLIED CORPORATION**
**Columbia Road and Park Avenue P.O. Box 2245R (Law Dept.)**
**Morristown New Jersey 07960(US)**

(72) Inventor: **Birdsall, Michael L.**
**140 Teller Road**
**Trumbull, Connecticut 06611(US)**

(74) Representative: **Bryant, Frank**
**L & M Limited Norman Road**
**Altrincham Cheshire WA 14 4ES(GB)**

(54) A system for locating information fields on a display and for generating field descriptors with information related to each of the display fields.

(57) This is a method and system for controlling the creation and modification of displayed information fields. A store is used to retain descriptors related to one or more information fields. The field descriptors are used to identify and establish selected parameters of the information fields on the display. By using the field descriptors, the form and appearance of data in any information field may be pre-established and used to prevent entry of non-acceptable data in the display.

FIELD DESCRIPTOR PROCESSOR

DISPLAY DEFAULT FIELD DESCRIPTOR

DEFINE DEFAULT DDc's

TRANSMIT

DISPLAY BLANK SCREEN

CONSTRUCT INFORMATION FIELDS / DESIGN FORM

TRANSMIT

DISPLAY INDIVIDUAL FIELD DESCRIPTORS

MODIFY DEFAULT DDc's

TRANSMIT

EDIT FIELD DESCRITOR

DISPLAY EDIT FIELD DESCRIPTOR

FIG.2

Croydon Printing Company Ltd.

/1

# A SYSTEM FOR LOCATING INFORMATION FIELDS
## ON A DISPLAY AND FOR
### GENERATING FIELD DESCRIPTORS WITH INFORMATION
### RELATED TO EACH OF THE DISPLAY FIELDS

## BACKGROUND OF THE INVENTION

This invention relates to the generation and composition of a form on a soft display such as a CRT and to the design of information fields in the form for preestablished information, or left blank for the insertion of later information. The invention particularly relates to the generation of field descriptors containing indicia controlling the manner in which the fields display information.

## DESCRIPTION OF THE PRIOR ART

Computerized systems for the design of forms are well known. Among the most commonly known are those used in conjunction with word processors where a form may contain preestablished information with blank areas left for the insertion of

-2-

variable information. Additionally, form generation systems may provide means for printing forms,
and for automatically inserting preestablished
sets of variable information in designated fields.
Control over the variables for any one information
field in the display, is limited by the amount of
control information which can be displayed. The
range of control which may be exercised over any
one information field in the display is also
limited by the amount of information that may be
displayed in conjunction with the displayed form
and limits the range of control that may be exercised over the information fields within the form.


SUMMARY OF THE INVENTION

This system provides a method and means for
designing forms on a soft display which may be
later displayed to form user and the insertion of
variable information. The form designer arranges
information fields on the display. Information
fields may be protected or not protected. An
unprotected field would be one left blank for the
insertion of variable information. A protected
field would be one containing information inserted
by the form designer and which could not otherwise
be modified by the form user. Protected information could specify for example the kind of
information to be entered into the associated

-3-

blank form. "Name" would be a protected field
which would be followed by a blank space or unprotected field for the insertion of a variable such
as a particular name.

According to the inventive principles, a means
and method is provided for establishing field
definitions or field descriptors describing conditions for data entry and the forms may be
entered and displayed in its respective information field. The field descriptor is a separate
display and lists aforesaid data entry conditions
and data form, (Display Data Criteria or DDC). In
designing the form, the designer is presented successively with field descriptor displays for
respective information fields.

The DDC disclosed within this application as
used in the preferred embodiment are not exhausted
and the invention is not to be thought of as
limited to those DDCs shown herein. These aforementioned DDCs include the following:

a) Alpha Only - Only characters A through Z
allowed.

b) Digit Only - Only numbers 0 through 9
allowed.

c) Number Only - Only numbers 0 through 9,
and special symbols allowed.

d) Alpha Numeric - Any character or number
allowed.

e) Must Complete - The information field must
be completed and all character positions in the
field must be entered.

f) Right Justify - Characters or numbers must enter the field from the right with the character or number string moving to the left.

g) Tab Key - When data entry in the field is complete, and cursor is positioned to the next field requiring data entry.

h) Must Enter Field - Data must be entered in the field before the form user is allowed to go on to other information fields.

i) Edits - padding, branches, jumps, range checks, etc., all of which will be described in detail in the following.

The DDCs may be displayed totally or partially on the field descriptor display. The field descriptor display may also include the page of the form in which the respective information field for that field descriptor is located, the number of the information field, the information field position given by line and column, the field length, and its initial value.

Additionally, DDC may be globally established by a system of global defaults. A default descriptor field is provided which allows the designer to specify DDCs once for all information fields and those DDCs are then inserted in each display information field's field descriptor upon the default of the designer to specify change thereto. In the preferred embodiment this is accomplished when the designer is designing the form, initially by specifying default DDCs without further operator intervention. These default DDCs are then stored and used with each generated information field. The form designer may specify, for each protected field on the form, wherever located, the DDCs specified for a protected field will be in accordance with that default field descriptor established by the designer. For example, for a protected field, the form of the information data field such as alpha characters, may be normal, highlighted, or blank. For an unprotected field, similarly the data may be displayed normal, highlighted, or blank. The designer may specify such appearance once through a default field descriptor. Additionally, for data entered into an unprotected field, the operator or designer, once may globally specify as an entry condition that for each such field, the data must be entered or must be completed or must be justified or can be tabbed or must be transmitted. Further additional controls for the unprotected fields may be determinative of whether the information entered may be in the form of alpha, digit, number data or alpha numeric data as specified above. As stated, this list is by no means exhaustive and other DDCs may be asserted into the default field descriptor for global control.

Error messages may be stored for use with the default field descriptor, responsive to errors made by the designer when inserting defaults.

The individual field descriptors are separate displays generated responsively to the establishment of information fields

In the preferred embodiment, for each information field displayed, there exists an individual field descriptor which allows the form designer to specify the DDCs the data displayed in the respective field whether inserted by the designer in a protected field or later by a form user in an unprotected field and also allows fields to be inserted and deleted.

The separately displayed individual field descriptors for each information field allows the form designer additionally to define and modify field definitions and to insert edit routines for variables (information which is ultimately entered into the respective field by the form user). For example, the form designer may insert an edit routine into the field descriptor which requires a selected symbol such as "X" be used to pad the unused portions of the field, or table data be inserted responsive to the variables data inserted by the form user or the information within one field be copied to another field or other edits as explained in the detailed description of the invention. In the preferred embodiment, for editing purposes, a separate edit descriptor field is generated for the individual field descriptors giving the form designer the opportunity to enter the full edit command in the prescribed syntax. The edit field descriptor follows the field descriptor upon the appropriate command when full edits are permitted in the field descriptor.

The preferred embodiment is shown as used within a computerized system for designing forms and where a display comprises a number or plurality of discrete areas or character spaces, and with the form designer designating groups of those discrete areas as separate and distinct information fields. The invention as described herein may establish global defaults displayed in a default field descriptor which may be modified as desired by the form designer. Additionally, the system includes means for generating individual descriptor fields separately displayed and which contain DDCs related to respective displayed information fields. Edit descriptor fields are displayed so edit routines can be entered for the respective information fields or modified accordingly.

More particularly, the inventive principles are shown for the preferred embodiment, in several interrelated programs. These programs are listed in detail in the Micro-Fiche within the Appendix. The programs produce a succession of individual and related displays which enable the form designer to design a form of his choice with a minimum amount of effort. The programs provide field descriptors defining DDCs for each of the form's information fields established on the display by the designer and which will later become an information field on the completed form when printed into hard copy. In the preferred embodiment, the form designer would typically first use the default field descriptor to globally define selected DDCs for the information fields he will successively place on the display, when designing the form. Once these DDC defaults have been established, then these DDCs will be used for individual information fields unless the designer

-8-

overrides a default and modifies a particular DDC
for a particular information field by means of an
individual field descriptor. The operator will
then display a blank screen and in the preferred
embodiment string together character spaces on the
screen to form information fields. A second part
of the program then creates in separate displays
individual field descriptors for respective information fields on the display, again listing DDCs
for the respective field. A third part of the
program generates an edit field descriptor and
allows the insertion of edits for the data in each
individual information field and provides a
display for each full edit for each respective
information field.

In summary, the above shows a method and
system for controlling the creation and modification of information fields in selected locations
on a display area. The foregoing is accomplished
by dividing the display into series of discrete
locations which are identified as information
fields, and for each information field
establishing individual field descriptors of DDCs
identifying selected parameters in the displayed
fields. The field descriptors may be accessed,
displayed and used to modify the DDCs for
affecting the display of information in the
respective information field. It may be used to
affect the appearance, form or conditions for data
entry into the information field. Within each
field descriptor is also added the capability for
adding programs for editing the information put
into each information field.

0109581

As stated above, the program for establishing the default field descriptor, each individual information field descriptor and the full edit field descriptors related to a respective information field or to other information fields are shown in detail in the Appendix as program listings on the Micro-Fiche.


## DESCRIPTION OF THE DRAWINGS

Fig. 1 shows a display such as a CRT display and with information fields arranged thereon.

Fig. 2 shows a state diagram of the Field Descriptor Processor and the successive descriptor display states according to the preferred embodiment.

Fig. 3 shows the manner in which the Default Field Descriptor is displayed and its displayed structure.

Fig. 4 shows the manner in which an Individual Field Descriptor is displayed and its displayed structure.

Fig. 5 shows the state diagram of the Full Edit Processor.

Fig. 6 shows the manner in which the Full Edit Descriptor is displayed and its display structure.

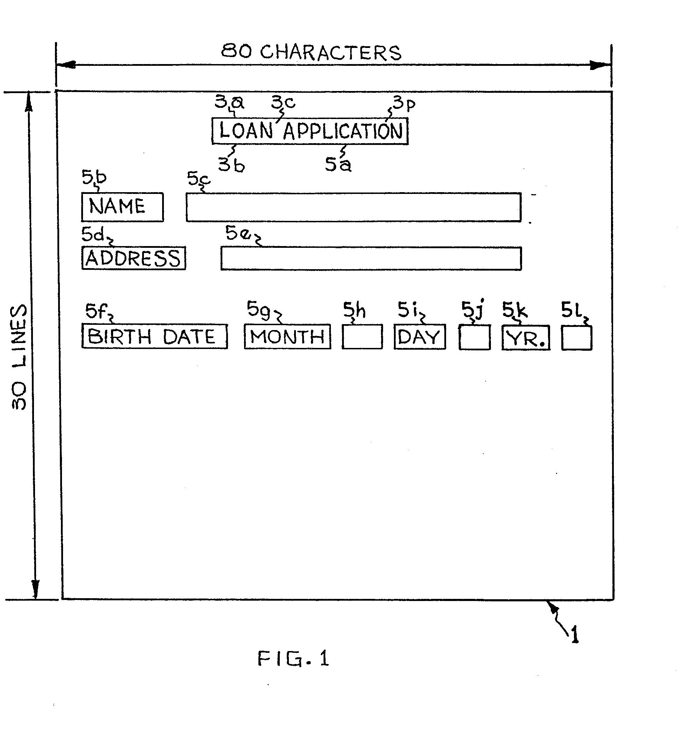

Fig. 1 shows a display such as a CRT used in the preferred embodiment, that is 80 character spaces wide by 30 lines in length. Each of the character spaces on the display, 3a to 3p for example, may be thought of as a series of discrete areas. The form designer may connect such a series of discrete areas to define information fields shown as numerals 5a to 5j. Information field 5a is shown comprising each of the discrete locations 3a, through 3p. A number of additional information fields may be placed or located in other display locations by the form designer and these locations may be stored in the computer memory, (i.e., 5b, 5c, 5d, 5f, 5g, 5h, 5i, 5j, 5k, 5l). The means and methods for designing a form on a display by building information fields and storing those locations in a computer store, are well known in the art and do not form part of the invention here and are not described in detail.

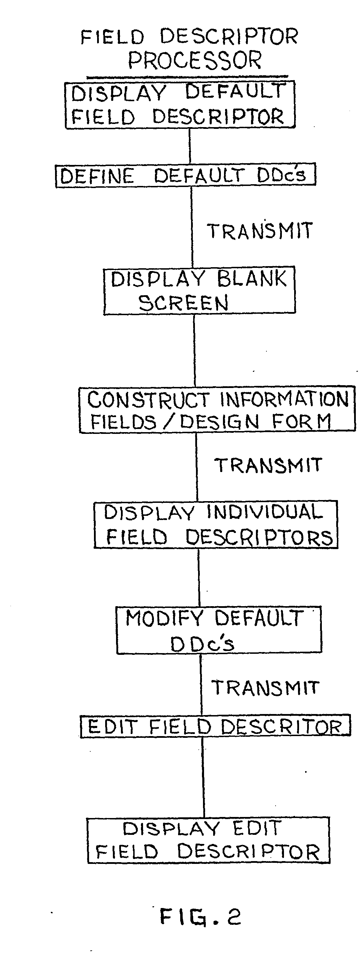

Referring to the principles of the invention, a state diagram is shown in Fig. 2, and which shows the process for building field descriptors. As a first step, a default field descriptor is displayed, permitting the designer to specify, globally, default conditions for each information field. The designer next displays a blank screen allowing the designer to select those discrete locations or character spaces needed to display the intended data. As shown in the preferred embodiment these discrete locations may be character locations or may be any other sized locations compatible with the data to be displayed and the system used.

-11-

Fig. 2 shows those display states whereby the form designer first defines defaults, then displays a blank screen and builds information fields as shown in Fig. 1. In the preferred embodiment, the transmit key causes the information fields displayed on the screen to be stored and used to build individual field descriptors for separate display as explained below. In the course of building the information fields, 5a, 51, as shown in Fig. 1, the system may be preprogramed with a number of error messages designed according to the system needs. For example, the information fields may be too large, or the information fields may not be properly separated by the number of blank spaces, or the field may be out of range of the allocated display field, etc. These error messages are displayed in response to various error conditions, as is known in the art, as the operator is designing the form using the various input keys.

A field descriptor processor means allows the designer to insert and then to modify DDCs with the formation of the information fields. The advantage of the individual field descriptor is in its presentation of DDCs for each information field and the facility given to the designer to change those DDC characteristics and thereby modify the way information is displayed in the information field. While field descriptors are generated for respective separate information fields, a default field descriptor may also be given for global DDCs for more than one of the information fields. In the preferred embodiment,
a default field descriptor is displayed to define
defaults for preselected DDCs.

Within the preferred embodiment, although not
limiting of the inventive principles, certain
information fields may be protected or nonpro-
tected. A protected field may be, for example, a
field in which specific display data is entered by
the form designer and which may not be modified by
the form user once the form design has been
established. An unprotected field may be a blank
field for the later insertion of variable information by the form user. An example of a protected field would be 5b "name", 5a "loan
application" and an example of an unprotected
field would be a series of blank spaces such as 5c
following the protected field "name". The form
user would insert the variable, namely the name of
the party seeking the loan. The generation of the
default field descriptors usually takes place
prior to the design of the form on the blank
screen as shown by the diagram in Fig. 2 and will
be used by the form designer to specify characteristics as described below for all the information fields such as 5a to 5l. The default field
descriptor in the preferred embodiment is used to
specify defaults and in the absence of a change to
the defaults, the default DDCs will be established
within the respective individual field descriptors
without any further action on the part of the form
designer. The form designer, by failing to specify a change to the default field descriptor,
allows the preestablished default DDCs to be imposed upon the information fields thereafter established on the blank display screen.

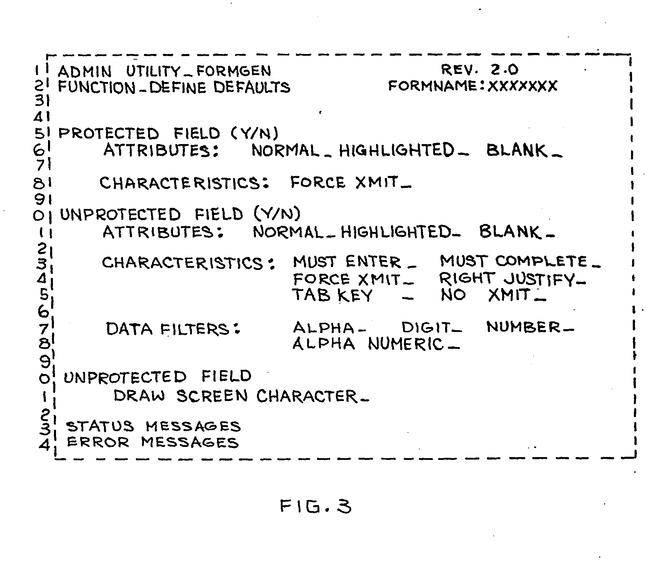

A default field descriptor as displayed in the preferred embodiment is shown in Fig. 3, and contains the utility being used, i.e., FORMGEN, its function "to define defaults", and the form name, the revision number and the default DDCs which may be accepted by the designer or modified.

In the preferred embodiment, the default field descriptor is used to define default DDCs for protective fields and unprotected fields such as 5b and 5c. As stated above, a protected field once established by the form designer cannot be modified or deleted by the form user. An example of a protected field would be a field 5b and an unprotected field 5c. In the preferred embodiment, as shown in Fig. 3, the default field descriptor for a protected field allows the form designer to specify whether the symbols displayed may be displayed normally, highlighted or blank, or whether the information must be transmitted once entered. For an unprotected field the default field descriptor allows the form designer to specify whether the information may be displayed normally, highlighted or blank, whether variable information must be entered into the unprotected field before the form user can proceed to a successive information field, whether the form user must complete the variable space, whether to justify, transmit, or to tab the cursor at the completion of the insertion of the variable information, etc.

-14-

The default field descriptor also is used to specify whether alpha, digit, number or alpha numeric information may be entered in unprotected fields. In the case of the preferred embodiment, number information may be digital or other specified symbols while alpha numeric information would be a combination of both. Further, to define the unprotected fields, the draw screen character symbol may be specified by the designer as a dash (-), or another symbol may be specified.

According to the inventive principles, the default field descriptor in conjunction with a specified information field, the field constructs a respective individual field descriptor. The default field descriptor will enter into the individual field descriptor the default DDCs upon information field creation. These default DDCs will be used to control the information field unless changed by the form designer in the individual field descriptor.

Status messages and error messages may also be displayed in case the designer uses the default field descriptor, or the field descriptors improperly. For example a "y" indicating "yes" may be allowed in only one of two or three designated selections such as the "Attributes" shown in Fig. 3 for the protective field. As the displayed characters can only be normal, highlighted or blank, insertion of more than one "y" in those spaces can be used to prompt an error message.

The defined default field descriptor as explained above is one variation of field descriptors. It is used prior to designing information fields as shown in Fig. 2 and provides a global system for defining the DDCs individual field descriptors, requiring the designer to only specify those requirements once. As will be shown below, a change to a DDC for any one individual information field, can be managed by means of the field descriptor for that one respective field.

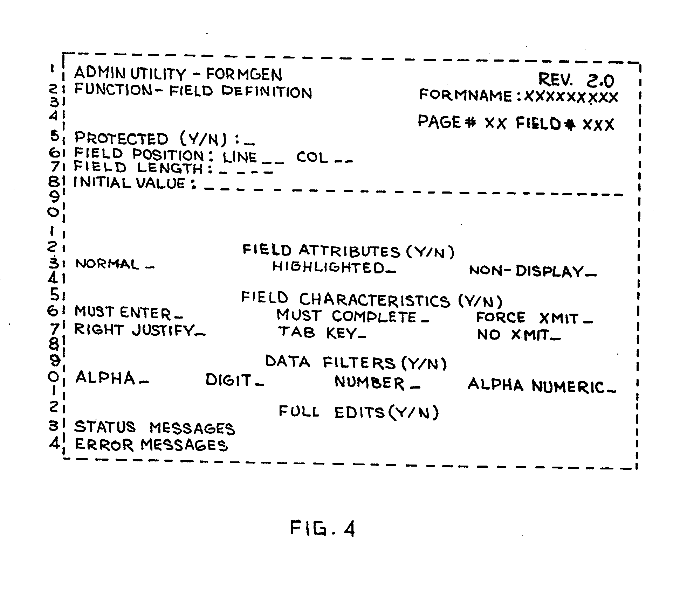

The individual field descriptor is shown in Fig. 4. According to the preferred embodiment, a separate displayable field descriptor will be stored for each of the information fields shown for example as 5a through 51. As in the case of the default field descriptor, the name of the utility and function, and the form name as well as the revision is contained in header information. Additionally, the individual field descriptor contains the page number and the field number for its respective field location. Where the page is a single form as shown in Fig. 1, then for each of the information fields on the form, the page number would be No. 1, and the field would be the appropriate field number such as 5a, 5b, 5c, etc. Additionally, the field descriptor would provide information as to whether the field was protected or unprotected, its position on a display in line and column, its length, and its initial value; which in the preferred embodiment may be from 0 to 145 bytes of alpha numeric data. The other definitions within the field descriptor relate to data entry and form such as field attributes, field characteristics, data filters, and additionally, whether the field may contain full edits. A "y" selection in specified ones of the blank locations would be inserted by the default field descriptor means upon information field creation and the form designer may then change that preestablished DDC. Some of the entries are mutually exclusive while others are independent. A "y" is allowed in only one of the field attribute selections and a "no" or blank would be required in all others. A "y" would be required in each selection for "field characteristics" as selected by the form designer. For "data filter" a "y" is allowed in only one of the four selections and a "no" blank would be required in the other three. In the full edit, a "y" specifies for the respective information field and field descriptor and is used to generate the edit field descriptor.

Error messages which may be inserted when field descriptors are improperly specified, such as when more than one mutually exclusive attribute is selected for a "yes" condition or for example when one information field is defined to overlap another, or where screen boundaries are exceeded or where memory space is exhausted. In the preferred embodiment, the individual field descriptor is constructed after the information field is specified and a command such as transmit is given causing the field definition to be written into a field descriptor and stored for later display, as shown in Fig. 2.

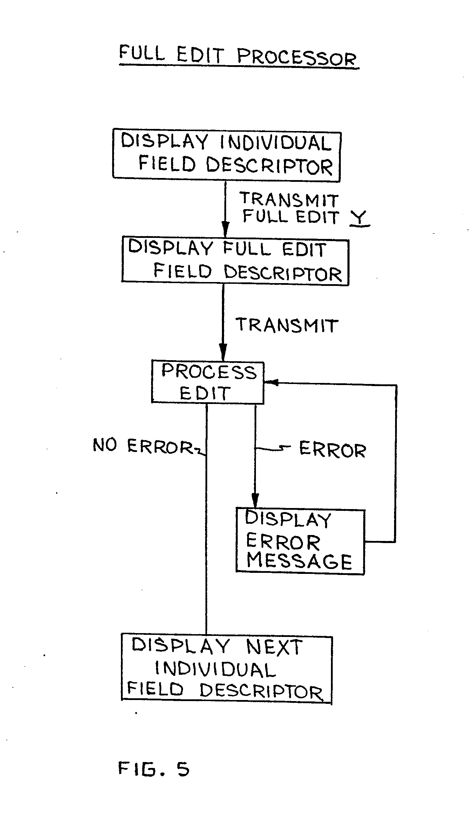

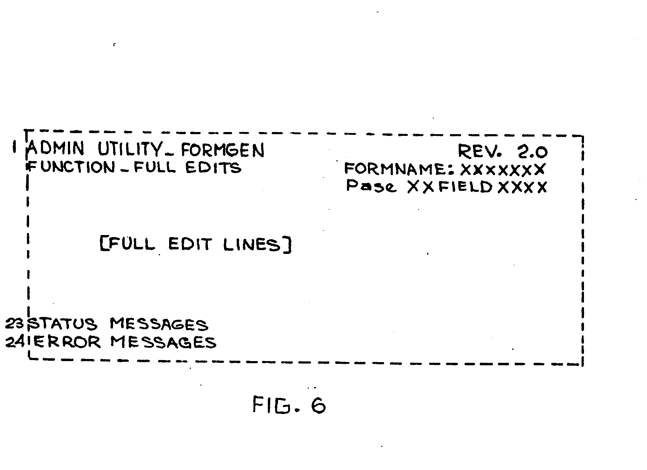

Associated with the individual field descriptors, is the capability of providing a full edit processor for each of the information fields. The full edit processor permits the form designer to enter and modify field editing commands using the full edit language, as provided in the preferred embodiment, and as described below. However, it should be understood that any suitable full edit language can also be provided. The full edit processor is used with the field descriptor when the field descriptor contains an affirmative indication such as a "yes" or "y", for "full edits" as shown in Fig. 4. The form designer then can insert editing commands using the command syntax for example as shown described in the following for the preferred embodiment. Upon pressing the transmit key in the preferred embodiment, all of the command lines are validated for proper syntax and if no errors are found, processing may continue with the next field definition. The state diagram for the full edit processor is as shown in Fig. 5. The full edit display is entered from the field definition display and permits the insertion of full edits for the data in the information field of the respective preceding field descriptor, or may be used exclusively of that data and with the data of any other field. The full edit display is as shown in Fig. 6 in the preferred embodiment, the edits are PAD, TABLE, RANGE A, RANGE N, COMPARE N, COMPARE A, JUMP, COPY, CHECK DIGIT, MESSAGE, SCREEN, TEST and ENDVAL. A predetermined syntax or grammar is required in the preferred embodiment for the full edit functions as described below. It should be understood however that the syntax or grammar can be changed without departing from the principles of the invention. Each full edit operation described below is within the following context:

Name: Full edit operation.

Purpose: A brief description of the operation.

Conditions: Condition indicator set or reset as a result of execution.

Format: The grammar and syntax of each full edit which is described within the limitations noted.

Example: An example of each full edit with typical values. Several examples are provided if variations and options are allowed.

Explanation: Each example has a corresponding explanation describing its operation and result.

Notes: Special considerations or other information.

Name: PAD

Purpose: To replace null (hex '00') character values within a field with a specified PAD value.

Conditions: None

Format: [<condition clause>] PAD <one char pad value>,<destination>[;<comments>]

Example: PAD LIT: '*',FLD:22. All null positions of field 22 of the current page and record will be padded with the literal value asterisk (*).

Field 22 before padding

A B C - - -

Field 22 after padding A B C * * *

Notes: If the source value contains more than one character, the rightmost character in the source will be used as the PAD value.

If replacement occurs, the MDT bit of the destination field (which must be distinguished from the MDT condition indicator) is set. Otherwise, the MDT bit is unaffected.

If the PAD value is a null, no replacement will take place, and the MDT bit is unaffected.

If the PAD value is null, no replacement will take place, and the MDT bit of the destination field will not be affected.

Name: TABLE

Purpose: Table look up will use the value in the source field to locate a transform held within the look up table. The transform value will be placed in the destination field.

Conditions: The equal (=) condition indicator will be set if a match is found and reset if no match is found within the table. The greater than (>) and less than (<) indicators will always be reset.

Format: [<condition clause>] TABLE <source>,<destination>,<table>[;<comments>] Format of transform table:

1) <from/to, from/to, ...> or

2) <from, from, from, ...>

Note: Format 2 can be used to determine if the source value contains a match in the table and set the equal (=) indicator accordingly. No transform or move to the destination is made. In this case, the destination operand is a dummy. It must have a valid value, but this value is never used.

-20-

Notes: If the source and the destination are the same field, the equal (=) indicator will be set if the source value is found in either the 'from' or 'to' value. This is to prevent improper condition setting when the TABLE operation may be executed twice.

Examples: TABLE FLD:3,FLD:3,LIT:'y/yes,n/no
If Field 3 contains 'yes' the equal indicator will be set.

TABLE FLD:3,FLD:7,LIT:'y/yes, n/no'
If field 3 contains 'yes, the equal (=) indicator will not be set.

Notes: The source value must match a 'form' value in the table exactly (according to the rules of COMPAREA) for a match to occur and the equal (=) condition indicator to be set.

The 'to' value in the matching transform (if specified) will be moved to the destination specified.

The move will take place in accordance with all the rules of the COPY operation.

2. As soon as a source character is found that is strictly greater than the corresponding max character, and less than (<) indicators are reset, the greater than (>) indicator is set, and processing of the RANGEA operation concludes.

3. If no source character is found that is either less than or greater than the corresponding max character, the equal (=) indicator is set and the greater than (>) and less than (<) indicators are reset.

If the max value is less than the min value, this is not deemed to be an error condition. The less than (<), equal (=) or greater than (>) indicator will be set (and the other comparision indicators reset) accordingly as the source value is less than, equal to or greater than the min value.

Name: RANGEA

Purpose: To determine if a given numeric value is within a specified numeric range (unsigned integers only).

Conditions: The = indicator is set when the source value is determined to be within the inclusive numeric range specified by min and max, and the < and > indicators are reset.

The > indicator is set when the numeric source is greater than the numeric max value, and the < and = indicators are reset.

The < indicator is set when the numeric source value is less than the numeric min value, and the = and > indicators are reset.

The ERR indicator is set if an invalid character is detected in source, min or max and is reset otherwise.

Format: [<condition clause>]RANGEA<source>,<min>,<max>[;<comments>]

Examples:

|  |  |  |  | Resulting |
|--------|----------|---------|-------|-----------|
| RANGEA | <source> | ,<min>, | <max> | Condition |
|  | 321 | 1 | , 999 | = |
|  | 1 | 4 | , 23 | < |
|  | 281 | 1 | , 19 | > |

Notes: The operation of the numeric range may be considered as if it were two numeric compares, one for source and min and another for source and max.

-22-

The characters must be 0-9 and null only. The null character is valid and is treated as equivalent to the digit 0. The use of any floating point of alpha symbols will result in the setting of the error indicator. The setting of =, >, < will be undetermined.

    i.e., Decimal Point      .      Error
         Plus or Minus    + or -    Error
         Non Digits (except null)    Error

    However, if the source value is less than or equal to the min value, an invalid character in the max will not be detected.

    If the max value is less than the min value, this is not deemed to be an error condition. The less than (<), equal (=) or greater than (>) indicator will be set (and the other comparison indicators reset) according as the source value is less than, equal to or greater than the min value.

    Name:  COMPARE N

    Purpose:  To compare two unsigned, integer numbers' values and set the comparison indicators accordingly.

    Conditions:  The = indicator is set when source 1 and source 2 are equal, and the < and > indicators are reset.

    The < indicator is set when source 1 is less than source 2, and the = and > indicators are reset.

    The > indicator is set when source 1 is greater than source 2, and the < and = indicators are reset.

    Format:  [<condition clause>] COMPAREN <source 1>,<source 2>[;<comments>] Example:  COMPAREN FLD:03,FLD:07

Explanation: The numeric content of field 03 is compared with the numeric content of field 07. The condition indicator is set accordingly.

Notes: The characters must be 0-9 and null only. The null character is valid and is treated as equivalent to the digit 0. The use of any floating point or alpha symbols will reset in the setting of error indicator. The setting of =, >, < will be undetermined.

i.e., Decimal Point             .         Error
      Plus or Minus        + or -      Error
      Non Digits (except null)      Error

Name: COMPARE A COMPARE ALPHA

Purpose: To compare two alphanumeric values from left to right to determine their relationship. The comparison indicators are set accordingly.

Conditions: The equal (=) indicator is set when source 1 and source 2 are found to be equal, and the <and> indicators are reset.

The less than (<) indicator is set when the character comparison determines that source 1 precedes source 2 as determined by the ASCII collating sequence, and the = and > indicators are reset.

The greater than (>) indicator is set when the character comparison determines that source 1 follows source 2 as determined by the ASCII collating sequence, and the < and = indicators are

Format: [<condition clause>] COMPAREA <source 1>,<source 2>[;<comments>]

Example: COMPAREA FLD:04, LIT:'ABC"

Explanation: The contents of field 4 are compared character for character left to right with
the literal string 'ABC'. The condition indicators are set accordingly.

Notes: If source 1 and source 2 differ in
length, the shorter of the two fields is deemed
extended on the right with nulls to the length of
the longer field, before the comparison.
Comparison of two fields of equal length may then
be performed.

The fields are compared, byte by byte, from
left to right, as follows:

a) As soon as a source 1 character is found
that is strictly less than the corresponding
source 2 character, the less than (<) indicator is
set, the equal (=) and greater than (>) indicator
are reset, and processing of the COMPAREA operation concludes.

b) As soon as a source 1 character is found
that is strictly greater than the corresponding
source 2 character, the greater than (>) indicator
is set, the less than (<) and equal (=) indicators are reset, and processing of the COMPAREA
operation concludes.

c) If no source 1 character is found that is
either greater than or less than the corresponding
source 2 character, the equal (=) indicator is set
and the less than (<) and greater than (>) indicators are reset.

Name: JUMP

Purpose: To cause processing to continue at a
specified page (PAGE:x) or field (FLD:nn) value.

Note: Once a JUMP is taken, edits for the
current field are considered complete.

Format:  [<condition clause>] JUMP
<destination>[;<comments>]

Example:  1)  JUMP FLD:03
Processing is to continue with field
03 of the current page.
2)  IF = THEN JUMP FLD:27
Processing is to continue with field
27 if the equal (=) condition indicator is currently set.
3)  JUMP PAGE:4
Field processing is to continue with
page 4.  (The first field is implied
on all JUMPs to PAGE:x)

Notes:  The destination operand does not have
the same form as the usual destination field
operands.  For JUMP, either a PAGE or a FLD must
be specified, but not both.

One use of the JUMP operation is to repeat
processing when an improper condition has been
detected.  The operation

JUMP FLD:*

naturally comes to mind for this purpose, in the
context of detecting an error (or other improper
condition), reporting it, and permitting
correction:

```
COMPAREN FLD:*, FLD:23 ;COMAPRE TO LIMIT
IF ERR THEN MESSAGE LIT:'INVALID
CHARACTER(S)'
IF ALL NOT ERR, > THEN MESSAGE
LIT:'MORTGAGE AMOUNT EXCEEDS LIMIT'
IF ANY ERR, > THEN JUMP FLD:*
;*** ERROR ***
```

The above example is disasterously improper. If either erroneous condition is detected during post-transaction processing, the full edit will be thrown into an unbreakable loop. The error message will appear on the screen, and if the RESET key is pressed, the message will appear again without any opportunity for correction.

What is missing is an ENDVAL operation which would terminate the post-transaction processing.

```
COMPAREN FLD:*, FLD:23 ;COMPARE TO LIMIT
IF ERR THEN MESSAGE LIT:'INVALID
CHARACTER(S)'
IF ALL NOT ERR, > THEN MESSAGE LIT:'MORTGAGE
AMOUNT EXCEEDS LIMIT'
IF ANY ERR, > THEN ENDVAL ERROR ;ABSOLUTELY
NECESSARY
IF ANY ERR, > THEN JUMP FLD:* ;OK, NOW.
```

Any JUMP operation, particularly if it is in a backward direction, should be carefully scrutinized to avoid inadvertent unbreakable loops. As the above examples show, both post-field processions and post-transaction processing must be considered. but the operation

```
<conditional clause> ENDVAL ERROR
```

should be used as a matter of routine before

```
<conditional clause> JUMP FLD:*
```

Name: COPY

Purpose: The copy operation will move information from the indicated source to the indicated destination.

Conditions: None

Format: [<condition clause>] COPY <source>,<destination>[;<comments>]

Example: 1) COPY FLD:4,FLD:26 2) COPY LIT:'mortgage',FLD:09

1) The contents of field 4 for the current form and record are moved into field 26.

2) The literal value 'mortgage' is moved left to right into field 09.

Notes:

1. The COPY operation will take place from left to right unless the source is a right justified field. In this case, it will take place from right to left.

2. The COPY operation will take place until either the source field is exhausted or the destination is full. When the source is shorter, the ramainder of the destination will be null filled to its limit. When the source is longer, the destination will be truncated.

3. If the characters of the source field which are to be moved include any non-null characters, the destination MDT bit will be set on.

4. If the characters of the source field which are to be moved are all null characters, nothing is done to the destination field.

Name: CKDIG

Purpose: CHECKDIGIT will determine the correctness of a numeric value as defined by a CHECKDIGIT algorithm and the right most character in the field.

Conditions:  The error (ERR) indicator will be set if the result of the check digit is invalid. The error (ERR) indicator will be reset if the result is correct.

Format:  [<condition clause>] CKDIG <source>,<type>[;<comments>]

Types:    IBM MOD10 - TYPE:10
          IBM MOD11 - TYPE:11

Example:  CKDIG FLD:16,TYPE:10

The numeric value in field 16 of the current record is used as input to the MOD10 check digit algorithm.  The error (ERR) indicator is set or reset accordingly.

Name:  MESSAGE

Purpose:  The message operation will display the value contained in the source on the error line of the associated display terminal as a blinking, highlighted message.  The operator must depress the reset key to continue processing.

Conditions:  None

Format:  [<condition clause>] MESSAGE <source>[;<comments>]

Examples:

1) MESSAGE LIT;'invalid entry'
   The literal value 'invalid entry' will be displayed on the error line of the associated CRT.

2) IF NOT = THEN MESSAGE FLD:27
   The contents of FIELD 27 of the current record will be displayed on the associated CRT error line if the equal (=) indicator is NOT set.

Notes: After the reset key is depressed, processing of the edits of the current field will continue without change.

Effects related to - but distinct from - those obtainable with MESSAGE may be obtained by using the COPY operation to move a message onto the screen or using the SCREEN operation to change the visibility of an existing field. Neither of these approaches suspends processing until the reset key has been depressed in response.

Name:  SCREEN

Purpose:  To manipulate the display characteristics of a specified field.

Conditions:  None

Format:  SCREEN [<condition clause>] <field>, <modification>[;<comments>]

Modification:  mod:<modification>

```
(mod:   BLINK       )
(mod:   NO BLINK    )
(mod:   NO DISPLAY  )
(mod:   HIGH LIGHT  )
(mod:   NORMAL      )
(mod:   ERASE       ) clear this field
                       turn on MDT
(mod:   CLEAR       ) clear all unprotected fields to null
                       and turn off all
                       MDTs on the current
                       page.
```

Notes:  Blink fields require the use of the leftmost character position of the associated field to function.  The contents of that character position will be lost while the field is blinking and will also be lost after the blinking has been halted.

The use of a COPY or TABLE operation to change the contents of a field may terminate blinking of that field or propagate the blinking character of the source. Also, the character which the system uses to cause blinking may be detected as an invalid numeric character.

The ERASE capability clears data characters in the field to nulls but leaves edit characters (if any) unaffected, and turns on the MDT bit (but leaves the MDT condition indicator unaffected).

The CLEAR capability clears unprotected data characters in all fields of the current screen to nulls, but leaves edit characters unaffected. It resets (turns off) all unprotected field MDT bits, but leaves the MDT conditions indicator unaffected. For the CLEAR operation, the field operand is ignored.

Name: TEST

Purpose: The TEST operation allows the Full edit user to determine the state of certain system and form information. Associated indicators are set accordingly.

Conditions: The MDT condition indicator is set or reset.

Format: TEST [<condition clause>] <source>,<test type>[;<comments>]

Test-Types: <test type> FOR:<state>(state MDT)

Example: TEST FLD:07,FOR:MDT

Field 7 of the current page will be examined to determine if the MDT (modified data tag) is set. If it is set the MDT condition will be set.

Notes: The only test which is implemented is a test of the MDT bit of a specified field.

The MDT bit indicated whether data in a field have been modified. For the MDT bit to be set does not necessarily mean that data have been entered; on the contrary, the MDT bit may have been set because the field was erased (manually or with the screen operation).

Name: ENDVAL

Purpose: The End Validation operation is provided to stop the post transaction validation process.

Conditions: None

Format: [<condition clause>] ENDVAL <reason> [;<comments>]

Reasons: ERROR
OK

Example: ENDVAL OK

The post transaction processing is considered complete and transmission or printing may begin (no return to Edits).

Example: ENDVAL ERROR

Post transaction validation has detected an error. The automatic validation process will stop with this operation. The next operation executed will be post field type generally expected to point out the error for an operator and take corrective action.

i.e., ENDVAL ERROR
MESSAGE LIT:'Field n in error'
JUMP FLD:n

Notes: ENDVAL OK has the same effect as the end of the edit operations for the field being edited when it is encountered: no further edits for this field are performed.

If ENDVAL OK is encountered after ENDVAL ERROR in editing the same field, the editing of that field is terminated (as described above), but the ENDVAL ERROR is honored in that field.

Processing will continue with the next field on the screen, rather than beginning transmission or printing.

The program listings for the inventive concepts described herein, namely the formation and display of the default field descriptor, the formation and display of each individual field descriptor for each respective information field, and the program for formation and display of the editing programs for each individual information field were written for a programmable control unit which is a general purpose micro computer with a single system bus and which accommodates system components such as the processor, common memory and I/O device controllers. Instruction formats are 16 bit word oriented. While the program listings are written for one microprocessor, the programming statements can be adapted to other general purpose microprocessors.

CLAIMS

1. A method of controlling the creation or modification of information fields, in selected locations on a computer controlled display comprising the steps of:

a) dividing a display into a series of discrete locations;

b) identifying one or more information fields as a plurality of said discrete locations;

c) establishing in said computer store, field descriptors related to said one or more information fields, and with said field descriptors identifying selected parameters of said information fields;

d) accessing said field descriptor from said store and displaying said parameters.

2. The method of claim 1, wherein said step of establishing said field descriptors includes the step of identifying parameters related to the appearance of information in said field area.

3. The method of claim 1, wherein said step of establishing said field descriptor includes the step of identifying parameters related to the form of said information in said field area.

4. The method of claim 1, wherein said step of establishing said field descriptors includes the step of identifying whether said information field is protected or unprotected.

5. The method of claim 1, wherein said step of establishing said field descriptor includes the step of identifying in said store, parameters

-34-

related to the requirement to enter said information in said field or to the position of said information in said field.

6. The method of claim 1, wherein said step of establishing said field descriptor includes the step of identifying parameters related to status or error messages.

7. The method of claim 1, wherein said step of establishing a field descriptor includes the step of identifying global defaults parameters for said field.

8. The method of claim 1, wherein said step of establishing field descriptors includes the step of establishing individual field descriptors for said respective information fields.

9. The method of claim 1, wherein said step c) includes the step of establishing one or more edit descriptors for editing the parameters in one or more of said information fields.

10. The method of claim 10, wherein said step of establishing edit descriptors includes the step of establishing said edit descriptor for a respective field descriptor and includes the step of establishing edit processes for one or more of said information fields including or excluding said respective field descriptor.

1/6

FIG. 1

FIELD DESCRIPTOR
PROCESSOR

DISPLAY DEFAULT
FIELD DESCRIPTOR

DEFINE DEFAULT DDc's

TRANSMIT

DISPLAY BLANK
SCREEN

CONSTRUCT INFORMATION
FIELDS / DESIGN FORM

TRANSMIT

DISPLAY INDIVIDUAL
FIELD DESCRIPTORS

MODIFY DEFAULT
DDc's

TRANSMIT

EDIT FIELD DESCRITOR

DISPLAY EDIT
FIELD DESCRIPTOR

FIG.2

0109581

3/6

```
ADMIN  UTILITY_FORMGEN                    REV. 2.0
FUNCTION_DEFINE DEFAULTS          FORMNAME:XXXXXXX


PROTECTED  FIELD (Y/N)
     ATTRIBUTES:   NORMAL_ HIGHLIGHTED_  BLANK_

     CHARACTERISTICS:  FORCE XMIT_

UNPROTECTED  FIELD (Y/N)
     ATTRIBUTES:   NORMAL_ HIGHLIGHTED_  BLANK_

     CHARACTERISTICS:  MUST ENTER _    MUST COMPLETE_
                       FORCE XMIT_    RIGHT JUSTIFY_
                       TAB KEY    _    NO   XMIT_

     DATA FILTERS:      ALPHA_    DIGIT_    NUMBER_
                        ALPHA NUMERIC_

UNPROTECTED  FIELD
     DRAW SCREEN CHARACTER_

STATUS MESSAGES
ERROR MESSAGES
```

FIG.3

```
ADMIN UTILITY - FORMGEN                           REV. 2.0
FUNCTION - FIELD DEFINITION              FORMNAME : XXXXXXXX

                                         PAGE # XX FIELD # XXX

PROTECTED (Y/N) : _
FIELD POSITION : LINE __ COL __
FIELD LENGTH : _ _ _ _
INITIAL VALUE : _ _ _ _ _ _ _ _ _ _ _ _ _ _ _ _ _ _ _ _


                         FIELD ATTRIBUTES (Y/N)
NORMAL _               HIGHLIGHTED _           NON-DISPLAY _

                       FIELD CHARACTERISTICS (Y/N)
MUST ENTER _             MUST COMPLETE _        FORCE XMIT _
RIGHT JUSTIFY _          TAB KEY _              NO XMIT _

                         DATA FILTERS (Y/N)
ALPHA _        DIGIT _           NUMBER _       ALPHA NUMERIC _

                         FULL EDITS (Y/N)
STATUS MESSAGES
ERROR MESSAGES
```

FIG. 4

5/6

## FULL EDIT PROCESSOR

FIG. 5

```
 ┌─ ── ── ── ── ── ── ── ── ── ── ── ──┐
 │ ADMIN UTILITY ‒ FORMGEN          REV. 2.0 │
 │ FUNCTION ‒ FULL EDITS       FORMNAME: XXXXXXX │
 │                             Page XX FIELD XXXX │
 │                                             │
 │        [FULL EDIT LINES]                    │
 │                                             │
 │                                             │
 │ 23 STATUS  MESSAGES                         │
 │ 24 ERROR MESSAGES                           │
 └─ ── ── ── ── ── ── ── ── ── ── ── ──┘
```

FIG. 6